# EUROPEAN PATENT APPLICATION

(11) **EP 3 702 983 A1**
(43) Date of publication of application: **02.09.2020**
(21) Application number: 20152391.7
(22) Date of filing: 17.01.2020
(51) Int. Cl.: G06Q 10/06

(54) **TRANSPORTATION SYSTEM AND METHOD**

(30) Priority: 26.02.2019 US 201916285528
(71) Applicant: Aptiv Technologies Limited, St. Michael (BB)
(72) Inventor: Mangal, Nandita, Los Altos, CA California 94024 (US); Laur, Michael H., Mission Viejo, CA California 92692 (US)
(74) Representative: Manitz Finsterwald Patent- und Rechtsanwaltspartnerschaft mbB

(57) **Abstract**

This disclosure is directed to techniques for identifying a plurality of pedestrians (1444) traveling on a path (1012); determining a count of the plurality of pedestrians (1444) traveling on the path (1012); comparing the count to a count threshold value; and in response to the count exceeding the count threshold value, identify a crowd condition; and in response to identifying the crowd condition, causing a vehicle (1482A) to go to the path (1012).

## Description

### FIELD OF THE INVENTION

This description relates to a vehicle transportation, and more specifically, techniques for directing transport vehicles to one or more locations.

### BACKGROUND

Autonomous ride sharing vehicles may not be deployed in areas of the greatest need to serve crowds of pedestrians.

### SUMMARY

The present invention proposes to solve the above mentioned problem by providing a method comprising: identifying a plurality of pedestrians traveling on a path; determining a count of the plurality of pedestrians traveling on the path; comparing the count to a count threshold value; in response to the count exceeding the count threshold value, identifying a crowd condition; and in response to identifying the crowd condition, causing at least one transport vehicle to go to the path.

According to other advantageous features of the present invention:
- the path includes one of an origination location and a destination of one or more of the plurality of pedestrians.
- in response to identifying the crowd condition, scheduling at least one transport vehicle to travel to the destination at a likely end time of an event associated with the destination.
- in response to identifying the crowd condition, conveying an offer for transportation to the plurality of pedestrians.
- identifying the plurality of pedestrians based on images from one or more camera sensors having a view of the path.
- identifying the plurality of pedestrians includes receiving data from one or more communication devices carried by one or more of the plurality of pedestrians.
- determining the count of pedestrians based on a count of pedestrians travelling in a predetermined geographical area; and identifying the crowd condition if the count of pedestrians within the geographical area exceeds the count threshold value.
- the threshold is a dynamic threshold.

The present invention also proposes to solve the above mentioned problem by providing a system comprising: a crowd detection module that: identifies a plurality of pedestrians traveling on a path; determines a count of the plurality of pedestrians traveling on the path; compares the count to a count threshold value; in response to the count exceeding the count threshold value, identifying a crowd condition; and in response to identifying the crowd condition, causing at least one transport vehicle to travel to the path.

According to other advantageous features of the present invention:
- the path includes one of an origination location and a destination of one or more of the plurality of pedestrians.
- the crowd detection module is further configured to: in response to identifying the crowd condition, schedule at least one transport vehicle to travel to the destination at a likely end time of an event associated with the destination.
- the crowd detection module is further configured to: in response to identifying the crowd condition, convey an offer for transportation to the plurality of pedestrians.
- the crowd detection module is further configured to: identify the plurality of pedestrians based on images from one or more camera sensors having a view of the path.
- the crowd detection module is further configured to: identify the plurality of pedestrians based on receiving data from one or more communication devices carried by one or more of the plurality of pedestrians.
- the crowd detection module is further configured to: determine the count of pedestrians travelling in a predetermined geographical area; and identify the crowd condition if the count of pedestrians within the geographical area exceeds the count threshold value.
- the threshold is a dynamic threshold.

The present invention also proposes to solve the above mentioned problem by providing non-tangible computer readable storage medium that stores instructions configured to
cause a computing device to: identify a plurality of pedestrians traveling on the path; determine a count of the plurality of pedestrians traveling on the path; compare the count to a count threshold value; in response to the count exceeding the count threshold value, identify a crowd condition; and in response to identifying the crowd condition, causing at least one transport vehicle to travel to the path.

According to other advantageous features of the present invention:
- the instructions further cause the computing device to:
- in response to identifying the crowd condition, scheduling at least one transport vehicle to travel to the destination at a likely end time of an event associated with the destination.
- the instructions further cause the computing device to: in response to identifying the crowd condition, convey an offer for transportation to the plurality of pedestrians.
- the instructions further cause the computing device to: identify the plurality of pedestrians based on images from one or more camera sensors having a view of the path.

### BRIEF DESCRIPTION OF THE DRAWINGS

FIG. 1 shows an example of an autonomous vehicle having autonomous capability.
FIG. 2 illustrates an example "cloud" computing environment.
FIG. 3 illustrates a computer system.
FIG. 4 shows an example architecture for an autonomous vehicle.
FIG. 5 shows an example of inputs and outputs that may be used by a perception module.
FIG. 6 shows an example of a LiDAR system.
FIG. 7 shows the LiDAR system in operation.
FIG. 8 shows the operation of the LiDAR system in additional detail.
FIG. 9 shows a block diagram of the relationships between inputs and outputs of a planning module.
FIG. 10 shows a directed graph used in path planning.
FIG. 11 shows a block diagram of the inputs and outputs of a control module.
FIG. 12 shows a block diagram of the inputs, outputs, and components of a controller;
FIG. 13 shows an example of a crowd detection module;
FIG. 14 shows an example of a scenario with pedestrians; and
FIG. 15 shows an example of a method of operating a crowd detection module.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

In the drawings, specific arrangements or orderings of schematic elements, such as those representing devices, modules, instruction blocks and data elements, are shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

Further, in the drawings, where connecting elements, such as solid or dashed lines or arrows, are used to illustrate a connection, relationship, or association between or among two or more other schematic elements, the absence of any such connecting elements is not meant to imply that no connection, relationship, or association can exist. In other words, some connections, relationships, or associations between elements are not shown in the drawings so as not to obscure the disclosure. In addition, for ease of illustration, a single connecting element is used to represent multiple connections, relationships or associations between elements. For example, where a connecting element represents a communication of signals, data, or instructions, it should be understood by those skilled in the art that such element represents one or multiple signal paths (e.g., a bus), as may be needed, to affect the communication.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

Several features are described hereafter that can each be used independently of one another or with any combination of other features. However, any individual feature may not address any of the problems discussed above or might only address one of the problems discussed above. Some of the problems discussed above might not be fully addressed by any of the features described herein. Although headings are provided, information related to a particular heading, but not found in the section having that heading, may also be found elsewhere in this description. Embodiments are described herein according to the following outline:
1. General Overview
2. Hardware Overview
3. Autonomous Vehicle Architecture
4. Autonomous Vehicle Inputs
5. Autonomous Vehicle Planning
6. Autonomous Vehicle Control
7. Crowd detection

### General Overview

Described herein is a system and method that identifies a crowd, i.e. a plurality of pedestrians, traveling on a path; determines a count of the plurality of pedestrians traveling on the path; compares the count to a count threshold value; and in response to the count exceeding the count threshold value, causes a vehicle (e.g. a taxi or shuttle) to go to the path.

### Hardware Overview

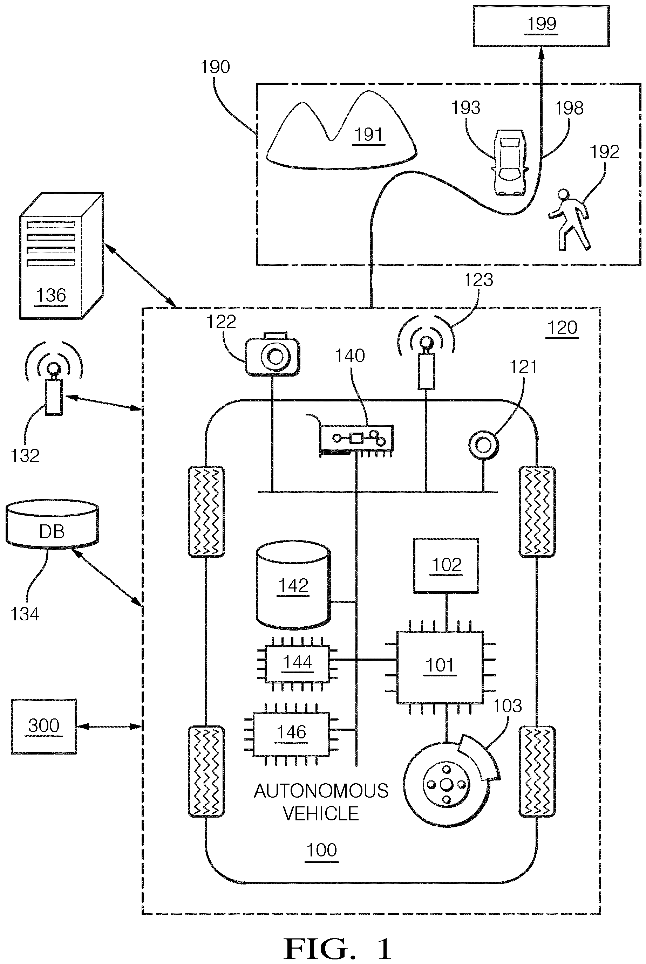

FIG. 1 shows an example of an autonomous vehicle 100 having autonomous capability.

As used herein, the term "autonomous capability" refers to a function, feature, or facility that enables a vehicle to be partially or fully operated without real-time human intervention, including without limitation fully autonomous vehicles, highly autonomous vehicles, and conditionally autonomous vehicles.

As used herein, an autonomous vehicle (AV) is a vehicle that possesses autonomous capability.

As used herein, "vehicle" includes means of transportation of goods or people. For example, cars, buses, trains, airplanes, drones, trucks, boats, ships, submersibles, dirigibles, etc. A driverless car is an example of a vehicle.

As used herein, "trajectory" refers to a path or route to navigate an AV from a first spatiotemporal location to second spatiotemporal location. In an embodiment, the first spatiotemporal location is referred to as the initial or starting location and the second spatiotemporal location is referred to as the destination, final location, goal, goal position, or goal location. In some examples, a trajectory is made up of one or more segments (e.g., sections of road) and each segment is made up of one or more blocks (e.g., portions of a lane or intersection). In an embodiment, the spatiotemporal locations correspond to real world locations. For example, the spatiotemporal locations are pick up or drop-off locations to pick up or drop-off persons or goods.

As used herein, "sensor(s)" includes one or more hardware components that detect information about the environment surrounding the sensor. Some of the hardware components can include sensing components (e.g., image sensors, biometric sensors), transmitting and/or receiving components (e.g., laser or radio frequency wave transmitters and receivers), electronic components such as analog-to-digital converters, a data storage device (such as a RAM and/or a nonvolatile storage), software or firmware components and data processing components such as an ASIC (application-specific integrated circuit), a microprocessor and/or a microcontroller.

As used herein, a "scene description" is a data structure, e.g. a list or data stream, that includes one or more classified or labeled objects detected by one or more sensors on the AV vehicle or provided by a source external to the AV.

As used herein, a "road" is a physical area that can be traversed by a vehicle, and may correspond to a named thoroughfare (e.g., city street, interstate freeway, etc.) or may correspond to an unnamed thoroughfare (e.g., a driveway in a house or office building, a section of a parking lot, a section of a vacant lot, a dirt path in a rural area, etc.). Because some vehicles (e.g., 4-wheel-drive pickup trucks, sport utility vehicles, etc.) are capable of traversing a variety of physical areas not specifically adapted for vehicle travel, a "road" may be a physical area not formally defined as a thoroughfare by any municipality or other governmental or administrative body.

As used herein, a "lane" is a portion of a road that can be traversed by a vehicle. A lane is sometimes identified based on lane markings. For example, a lane may correspond to most or all of the space between lane markings, or may correspond to only some (e.g., less than 50%) of the space between lane markings. For example, a road having lane markings spaced far apart might accommodate two or more vehicles between the markings, such that one vehicle can pass the other without traversing the lane markings, and thus could be interpreted as having a lane narrower than the space between the lane markings, or having two lanes between the lane markings. A lane could also be interpreted in the absence of lane markings. For example, a lane may be defined based on physical features of an environment, e.g., rocks and trees along a thoroughfare in a rural area or, e.g., natural obstructions to be avoided in an undeveloped area. A lane could also be interpreted independent of lane markings or physical features. For example, a lane could be interpreted based on an arbitrary path free of obstructions in an area that otherwise lacks features that would be interpreted as lane boundaries. In an example scenario, an AV could interpret a lane through an obstruction-free portion of a field or empty lot. In another example scenario, an AV could interpret a lane through a wide (e.g., wide enough for two or more lanes) road that does not have lane markings. In this scenario, the AV could communicate information about the lane to other AVs so that the other AVs can use the same lane information to coordinate path planning among themselves.

The term "over-the-air (OTA) client" includes any AV, or any electronic device (e.g., computer, controller, Internet of Things (IoT) device, electronic control unit (ECU)) that is embedded in, coupled to, or in communication with an AV.

The term "over-the-air (OTA) update" means any update, change, deletion or addition to software, firmware, data or configuration settings, or any combination thereof, that is delivered to an OTA client using proprietary and/or standardized wireless communications technology, including but not limited to: cellular mobile communications (e.g., 2G, 3G, 4G, 5G), radio wireless area networks (e.g., Wi-Fi) and/or satellite Internet.

The term "edge node" means one or more edge devices coupled to a network that provide a portal for communication with AVs and can communicate with other edge nodes and a cloud based computing platform, for scheduling and delivering OTA updates to OTA clients.

The term "edge device" means a device that implements an edge node and provides a physical wireless access point (AP) into enterprise or service provider (e.g., VERIZON, AT&T) core networks. Examples of edge devices include but are not limited to: computers, controllers, transmitters, routers, routing switches, integrated access devices (IADs), multiplexers, metropolitan area network (MAN) and wide area network (WAN) access devices.

"One or more" includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this description, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

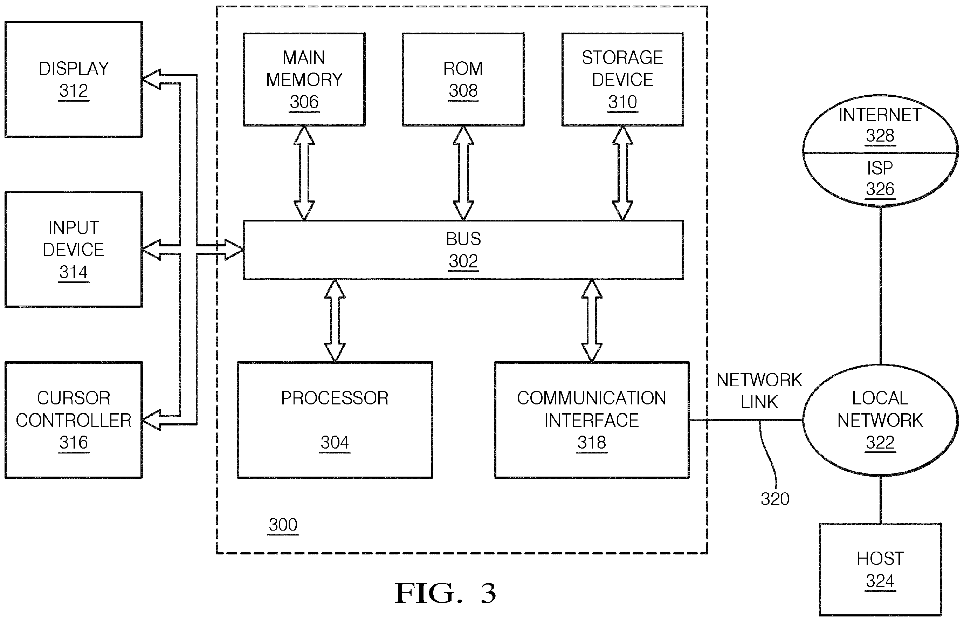

As used herein, an AV system refers to the AV along with the array of hardware, software, stored data, and data generated in real-time that supports the operation of the AV. In an embodiment, the AV system is incorporated within the AV. In an embodiment, the AV system is spread across several locations. For example, some of the software of the AV system is implemented on a cloud computing environment similar to cloud computing environment 300 described below with respect to FIG. 3.

In general, this document describes technologies applicable to any vehicles that have one or more autonomous capabilities including fully autonomous vehicles, highly autonomous vehicles, and conditionally autonomous vehicles, such as so-called Level 5, Level 4 and Level 3 vehicles, respectively (see SAE International's standard J3016: Taxonomy and Definitions for Terms Related to On-Road Motor Vehicle Automated Driving Systems, which is incorporated by reference in its entirety, for more details on the classification of levels of autonomy in vehicles). The technologies described in this document are also applicable to partially autonomous vehicles and driver assisted vehicles, such as so-called Level 2 and Level 1 vehicles (see SAE International's standard J3016: Taxonomy and Definitions for Terms Related to On-Road Motor Vehicle Automated Driving Systems). In an embodiment, one or more of the Level 1, 2, 3, 4 and 5 vehicle systems may automate certain vehicle operations (e.g., steering, braking, and using maps) under certain operating conditions based on processing of sensor inputs. The technologies described in this document can benefit vehicles in any levels, ranging from fully autonomous vehicles to human-operated vehicles.

Autonomous vehicles have advantages over vehicles that require a human driver. One advantage is safety. For example, in 2016, the United States experienced 6 million automobile accidents, 2.4 million injuries, 40,000 fatalities, and 13 million vehicles in crashes, estimated at a societal cost of $910+ billion. U.S. traffic fatalities per 100 million miles traveled have been reduced from about six to about one from 1965 to 2015, in part due to additional safety measures deployed in vehicles. For example, an additional half second of warning that a crash is about to occur is believed to mitigate 60% of front-to-rear crashes. However, passive safety features (e.g., seat belts, airbags) have likely reached their limit in improving this number. Thus, active safety measures, such as automated control of a vehicle, are the likely next step in improving these statistics. Because human drivers are believed to be responsible for a critical pre-crash event in 95% of crashes, automated driving systems are likely to achieve better safety outcomes, e.g., by reliably recognizing and avoiding critical situations better than humans; making better decisions, obeying traffic laws, and predicting future events better than humans; and reliably controlling a vehicle better than a human.

Referring to FIG. 1, an AV system 120 operates the AV 100 along a trajectory 198 through an environment 190 to a destination 199 (sometimes referred to as a final location) while avoiding objects (e.g., natural obstructions 191, vehicles 193, pedestrians 192, cyclists, and other obstacles) and obeying rules of the road (e.g., rules of operation or driving preferences).

In an embodiment, the AV system 120 includes devices 101 that are instrumented to receive and act on operational commands from the computer processors 146. In an embodiment, computing processors 146 are similar to the processor 304 described below in reference to FIG. 3. Examples of devices 101 include a steering control 102, brakes 103, gears, accelerator pedal or other acceleration control mechanisms, windshield wipers, side-door locks, window controls, and turn-indicators.

In an embodiment, the AV system 120 includes sensors 121 for measuring or inferring properties of state or condition of the AV 100, such as the AV's position, linear and angular velocity and acceleration, and heading (e.g., an orientation of the leading end of AV 100). Example of sensors 121 are GPS, inertial measurement units (IMU) that measure both vehicle linear accelerations and angular rates, wheel speed sensors for measuring or estimating wheel slip ratios, wheel brake pressure or braking torque sensors, engine torque or wheel torque sensors, and steering angle and angular rate sensors.

In an embodiment, the sensors 121 also include sensors for sensing or measuring properties of the AV's environment. For example, monocular or stereo video cameras 122 in the visible light, infrared or thermal (or both) spectra, LiDAR 123, RADAR, ultrasonic sensors, time-of-flight (TOF) depth sensors, speed sensors, temperature sensors, humidity sensors, and precipitation sensors.

In an embodiment, the AV system 120 includes a data storage unit 142 and memory 144 for storing machine instructions associated with computer processors 146 or data collected by sensors 121. In an embodiment, the data storage unit 142 is similar to the ROM 308 or storage device 310 described below in relation to FIG. 3. In an embodiment, memory 144 is similar to the main memory 306 described below. In an embodiment, the data storage unit 142 and memory 144 store historical, real-time, and/or predictive information about the environment 190. In an embodiment, the stored information includes maps, driving performance, traffic congestion updates or weather conditions. In an embodiment, data relating to the environment 190 is transmitted to the AV 100 via a communications channel from a remotely located database 134.

In an embodiment, the AV system 120 includes communications devices 140 for communicating measured or inferred properties of other vehicles' states and conditions, such as positions, linear and angular velocities, linear and angular accelerations, and linear and angular headings to the AV 100. These devices include Vehicle-to-Vehicle (V2V) and Vehicle-to-Infrastructure (V2I) communication devices and devices for wireless communications over point-to-point or ad hoc networks or both. In an embodiment, the communications devices 140 communicate across the electromagnetic spectrum (including radio and optical communications) or other media (e.g., air and acoustic media). A combination of Vehicle-to-Vehicle (V2V) Vehicle-to-Infrastructure (V2I) communication (and, in some embodiments, one or more other types of communication) is sometimes referred to as Vehicle-to-Everything (V2X) communication. V2X communication typically conforms to one or more communications standards for communication with, between, and among autonomous vehicles.

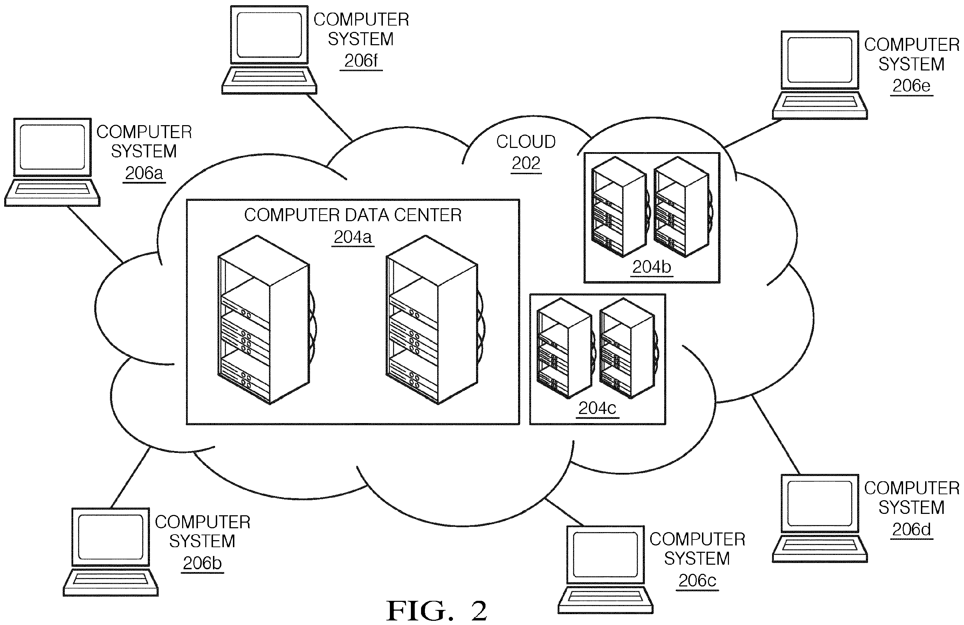

In an embodiment, the communication devices 140 include communication interfaces. For example, wired, wireless, WiMAX, Wi-Fi, Bluetooth, satellite, cellular, optical, near field, infrared, or radio interfaces. The communication interfaces transmit data from a remotely located database 134 to AV system 120. In an embodiment, the remotely located database 134 is embedded in a cloud computing environment 200 as described in FIG. 2. The communication interfaces 140 transmit data collected from sensors 121 or other data related to the operation of AV 100 to the remotely located database 134. In an embodiment, communication interfaces 140 transmit information that relates to teleoperations to the AV 100. In some embodiments, the AV 100 communicates with other remote (e.g., "cloud") servers 136.

In an embodiment, the remotely located database 134 also stores and transmits digital data (e.g., storing data such as road and street locations). Such data is stored on the memory 144 on the AV 100, or transmitted to the AV 100 via a communications channel from the remotely located database 134.

In an embodiment, the remotely located database 134 stores and transmits historical information about driving properties (e.g., speed and acceleration profiles) of vehicles that have previously traveled along trajectory 198 at similar times of day. In one implementation, such data may be stored on the memory 144 on the AV 100, or transmitted to the AV 100 via a communications channel from the remotely located database 134.

Computing devices 146 located on the AV 100 algorithmically generate control actions based on both real-time sensor data and prior information, allowing the AV system 120 to execute its autonomous driving capabilities.

In an embodiment, the AV system 120 includes computer peripherals 132 coupled to computing devices 146 for providing information and alerts to, and receiving input from, a user (e.g., an occupant or a remote user) of the AV 100. In an embodiment, peripherals 132 are similar to the display 312, input device 314, and cursor controller 316 discussed below about FIG. 3. The coupling is wireless or wired. Any two or more of the interface devices may be integrated into a single device.

FIG. 2 illustrates an example "cloud" computing environment. Cloud computing is a model of service delivery for enabling convenient, on-demand network access to a shared pool of configurable computing resources (e.g. networks, network bandwidth, servers, processing, memory, storage, applications, virtual machines, and services). In typical cloud computing systems, one or more large cloud data centers house the machines used to deliver the services provided by the cloud. Referring now to FIG. 2, the cloud computing environment 200 includes cloud data centers 204a, 204b, and 204c that are interconnected through the cloud 202. Data centers 204a, 204b, and 204c provide cloud computing services to computer systems 206a, 206b, 206c, 206d, 206e, and 206f connected to cloud 202.

The cloud computing environment 200 includes one or more cloud data centers. In general, a cloud data center, for example the cloud data center 204a shown in FIG. 2, refers to the physical arrangement of servers that make up a cloud, for example the cloud 202 shown in FIG. 2, or a particular portion of a cloud. For example, servers are physically arranged in the cloud datacenter into rooms, groups, rows, and racks. A cloud datacenter has one or more zones, which include one or more rooms of servers. Each room has one or more rows of servers, and each row includes one or more racks. Each rack includes one or more individual server nodes. In some implementation, servers in zones, rooms, racks, and/or rows are arranged into groups based on physical infrastructure requirements of the datacenter facility, which include power, energy, thermal, heat, and/or other requirements. In an embodiment, the server nodes are like the computer system described in FIG. 3. The data center 204a has many computing systems distributed through many racks.

The cloud 202 includes cloud data centers 204a, 204b, and 204c along with the network and networking resources (for example, networking equipment, nodes, routers, switches, and networking cables) that interconnect the cloud data centers 204a, 204b, and 204c and help facilitate the computing systems' 206a-f access to cloud computing services. In an embodiment, the network represents any combination of one or more local networks, wide area networks, or internetworks coupled using wired or wireless links deployed using terrestrial or satellite connections. Data exchanged over the network, is transferred using any number of network layer protocols, such as Internet Protocol (IP), Multiprotocol Label Switching (MPLS), Asynchronous Transfer Mode (ATM), Frame Relay, etc. Furthermore, in embodiments where the network represents a combination of multiple sub-networks, different network layer protocols are used at each of the underlying sub-networks. In some embodiments, the network represents one or more interconnected internetworks, such as the public Internet.

The computing systems 206a-f or cloud computing services consumers are connected to the cloud 202 through network links and network adapters. In an embodiment, the computing systems 206a-f are implemented as various computing devices, for example servers, desktops, laptops, tablet, smartphones, Internet of Things (IoT) devices, autonomous vehicles (including, cars, drones, shuttles, trains, buses, etc.) and consumer electronics. In an embodiment, the computing systems 206a-f are implemented in or as a part of other systems.

FIG. 3 illustrates a computer system 300. In an implementation, the computer system 300 is a special purpose computing device. The special-purpose computing device is hard-wired to perform the techniques or includes digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. In various embodiments, the special-purpose computing devices are desktop computer systems, portable computer systems, handheld devices, network devices or any other device that incorporates hard-wired and/or program logic to implement the techniques.

In an embodiment, the computer system 300 includes a bus 302 or other communication mechanism for communicating information, and a hardware processor 304 coupled with a bus 302 for processing information. The hardware processor 304 is, for example, a general-purpose microprocessor. The computer system 300 also includes a main memory 306, such as a random-access memory (RAM) or other dynamic storage device, coupled to the bus 302 for storing information and instructions to be executed by processor 304. In one implementation, the main memory 306 is used for storing temporary variables or other intermediate information during execution of instructions to be executed by the processor 304. Such instructions, when stored in non-transitory storage media accessible to the processor 304, render the computer system 300 into a special-purpose machine that is customized to perform the operations specified in the instructions.

In an embodiment, the computer system 300 further includes a read only memory (ROM) 308 or other static storage device coupled to the bus 302 for storing static information and instructions for the processor 304. A storage device 310, such as a magnetic disk, optical disk, solid-state drive, or three-dimensional cross point memory is provided and coupled to the bus 302 for storing information and instructions.

In an embodiment, the computer system 300 is coupled via the bus 302 to a display 312, such as a cathode ray tube (CRT), a liquid crystal display (LCD), plasma display, light emitting diode (LED) display, or an organic light emitting diode (OLED) display for displaying information to a computer user. An input device 314, including alphanumeric and other keys, is coupled to bus 302 for communicating information and command selections to the processor 304. Another type of user input device is a cursor controller 316, such as a mouse, a trackball, a touch-enabled display, or cursor direction keys for communicating direction information and command selections to the processor 304 and for controlling cursor movement on the display 312. This input device typically has two degrees of freedom in two axes, a first axis (e.g., x-axis) and a second axis (e.g., y-axis), that allows the device to specify positions in a plane.

According to one embodiment, the techniques herein are performed by the computer system 300 in response to the processor 304 executing one or more sequences of one or more instructions contained in the main memory 306. Such instructions are read into the main memory 306 from another storage medium, such as the storage device 310. Execution of the sequences of instructions contained in the main memory 306 causes the processor 304 to perform the process steps described herein. In alternative embodiments, hard-wired circuitry is used in place of or in combination with software instructions.

The term "storage media" as used herein refers to any non-transitory media that store data and/or instructions that cause a machine to operate in a specific fashion. Such storage media includes non-volatile media and/or volatile media. Non-volatile media includes, for example, optical disks, magnetic disks, solid-state drives, or three-dimensional cross point memory, such as the storage device 310. Volatile media includes dynamic memory, such as the main memory 306. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NV-RAM, or any other memory chip or cartridge.

Storage media is distinct from but may be used in conjunction with transmission media. Transmission media participates in transferring information between storage media. For example, transmission media includes coaxial cables, copper wire and fiber optics, including the wires that comprise the bus 302. Transmission media can also take the form of acoustic or light waves, such as those generated during radio-wave and infrared data communications.

In an embodiment, various forms of media are involved in carrying one or more sequences of one or more instructions to the processor 304 for execution. For example, the instructions are initially carried on a magnetic disk or solid-state drive of a remote computer. The remote computer loads the instructions into its dynamic memory and send the instructions over a telephone line using a modem. A modem local to the computer system 300 receives the data on the telephone line and use an infrared transmitter to convert the data to an infrared signal. An infrared detector receives the data carried in the infrared signal and appropriate circuitry places the data on the bus 302. The bus 302 carries the data to the main memory 306, from which processor 304 retrieves and executes the instructions. The instructions received by the main memory 306 may optionally be stored on the storage device 310 either before or after execution by processor 304.

The computer system 300 also includes a communication interface 318 coupled to the bus 302. The communication interface 318 provides a two-way data communication coupling to a network link 320 that is connected to a local network 322. For example, the communication interface 318 is an integrated service digital network (ISDN) card, cable modem, satellite modem, or a modem to provide a data communication connection to a corresponding type of telephone line. As another example, the communication interface 318 is a local area network (LAN) card to provide a data communication connection to a compatible LAN. In some implementations, wireless links are also implemented. In any such implementation, the communication interface 318 sends and receives electrical, electromagnetic, or optical signals that carry digital data streams representing various types of information.

The network link 320 typically provides data communication through one or more networks to other data devices. For example, the network link 320 provides a connection through the local network 322 to a host computer 324 or to a cloud data center or equipment operated by an Internet Service Provider (ISP) 326. The ISP 326 in turn provides data communication services through the world-wide packet data communication network now commonly referred to as the "Internet" 328. The local network 322 and Internet 328 both use electrical, electromagnetic or optical signals that carry digital data streams. The signals through the various networks and the signals on the network link 320 and through the communication interface 318, which carry the digital data to and from the computer system 300, are example forms of transmission media. In an embodiment, the network link 320 contains the cloud 202 or a part of the cloud 202 described above.

The computer system 300 sends messages and receives data, including program code, through the network(s), the network link 320, and the communication interface 318. In an embodiment, the computer system 300 receives code for processing. The received code is executed by the processor 304 as it is received, and/or stored in storage device 310, or other non-volatile storage for later execution.

### Autonomous Vehicle Architecture

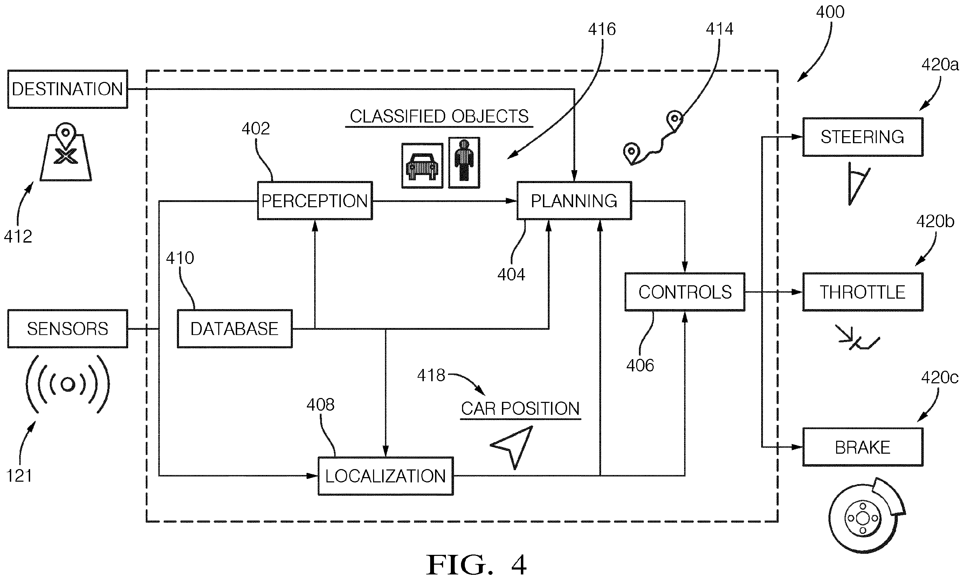

FIG. 4 shows an example architecture 400 for an autonomous vehicle (e.g., the AV 100 shown in FIG. 1). The architecture 400 includes a perception module 402 (sometimes referred to as a perception circuit), a planning module 404 (sometimes referred to as a planning circuit), a control module 406 (sometimes referred to as a control circuit), a localization module 408 (sometimes referred to as a localization circuit), and a database module 410 (sometimes referred to as a database circuit). Each module plays a role in the operation of the AV 100. Together, the modules 402, 404, 406, 408, and 410 may be part of the AV system 120 shown in FIG. 1. In some embodiments, any of the modules 402, 404, 406, 408, and 410 is a combination of computer software (e.g., executable code stored on a computer-readable medium) and computer hardware (e.g., one or more microprocessors, microcontrollers, application-specific integrated circuits [ASICs]), hardware memory devices, other types of integrated circuits, other types of computer hardware, or a combination of any or all of these things). Each of the modules 402, 404, 406, 408, and 410 is sometimes referred to as a processing circuit (e.g., computer hardware, computer software, or a combination of the two). A combination of any or all of the modules 402, 404, 406, 408, and 410 is also an example of a processing circuit.

In use, the planning module 404 receives data representing a destination 412 and determines data representing a trajectory 414 (sometimes referred to as a route) that can be traveled by the AV 100 to reach (e.g., arrive at) the destination 412. In order for the planning module 404 to determine the data representing the trajectory 414, the planning module 404 receives data from the perception module 402, the localization module 408, and the database module 410.

The perception module 402 identifies nearby physical objects using one or more sensors 121, e.g., as also shown in FIG. 1. The objects are classified (e.g., grouped into types such as pedestrian, bicycle, automobile, traffic sign, etc.) and a scene description including the classified objects 416 is provided to the planning module 404.

The planning module 404 also receives data representing the AV position 418 from the localization module 408. The localization module 408 determines the AV position by using data from the sensors 121 and data from the database module 410 (e.g., a geographic data) to calculate a position. For example, the localization module 408 uses data from a GNSS (Global Navigation Satellite System) sensor and geographic data to calculate a longitude and latitude of the AV. In an embodiment, data used by the localization module 408 includes high-precision maps of the roadway geometric properties, maps describing road network connectivity properties, maps describing roadway physical properties (such as traffic speed, traffic volume, the number of vehicular and cyclist traffic lanes, lane width, lane traffic directions, or lane marker types and locations, or combinations of them), and maps describing the spatial locations of road features such as crosswalks, traffic signs or other travel signals of various types. In an embodiment, the high-precision maps are constructed by adding data through automatic or manual annotation to low-precision maps.

The control module 406 receives the data representing the trajectory 414 and the data representing the AV position 418 and operates the control functions 420a-c (e.g., steering, throttling, braking, ignition) of the AV in a manner that will cause the AV 100 to travel the trajectory 414 to the destination 412. For example, if the trajectory 414 includes a left turn, the control module 406 will operate the control functions 420a-c in a manner such that the steering angle of the steering function will cause the AV 100 to turn left and the throttling and braking will cause the AV 100 to pause and wait for passing pedestrians or vehicles before the turn is made.

### Autonomous Vehicle Inputs

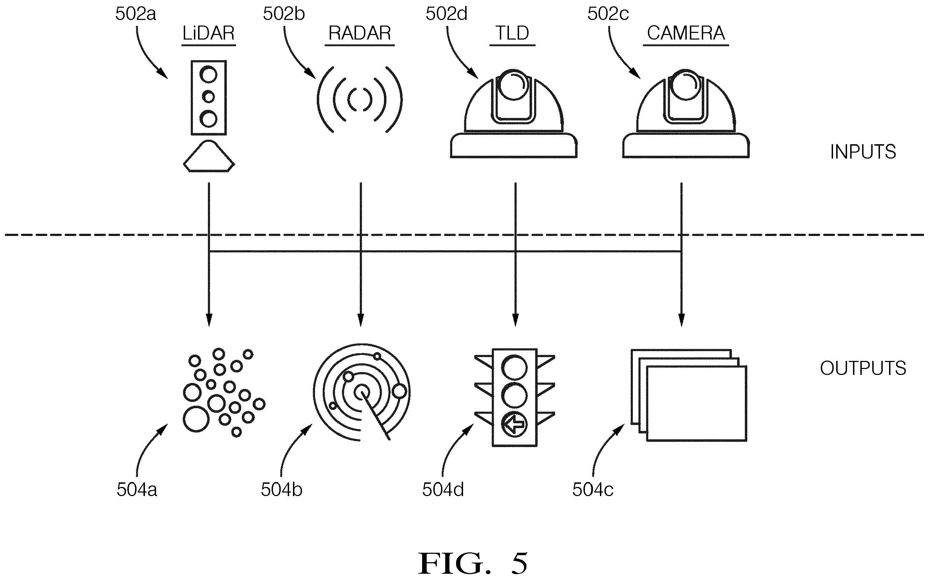

FIG. 5 shows an example of inputs 502a-d (e.g., sensors 121 shown in FIG. 1) and outputs 504a-d (e.g., sensor data) that is used by the perception module 402 (FIG. 4). One input 502a is a LiDAR (Light Detection and Ranging) system (e.g., LiDAR 123 shown in FIG. 1). LiDAR is a technology that uses light (e.g., bursts of light such as infrared light) to obtain data about physical objects in its line of sight. A LiDAR system produces LiDAR data as output 504a. For example, LiDAR data is collections of 3D or 2D points (also known as a point clouds) that are used to construct a representation of the environment 190.

Another input 502b is a RADAR system. RADAR is a technology that uses radio waves to obtain data about nearby physical objects. RADARs can obtain data about objects not within the line of sight of a LiDAR system. A RADAR system 502b produces RADAR data as output 504b. For example, RADAR data are one or more radio frequency electromagnetic signals that are used to construct a representation of the environment 190.

Another input 502c is a camera system. A camera system uses one or more cameras (e.g., digital cameras using a light sensor such as a charge-coupled device [CCD]) to obtain information about nearby physical objects. A camera system produces camera data as output 504c. Camera data often takes the form of image data (e.g., data in an image data format such as RAW, JPEG, PNG, etc.). In some examples, the camera system has multiple independent cameras, e.g., for the purpose of stereopsis (stereo vision), which enables the camera system to perceive depth. Although the objects perceived by the camera system are described here as "nearby," this is relative to the AV. In use, the camera system may be configured to "see" objects far, e.g., up to a kilometer or more ahead of the AV. Accordingly, the camera system may have features such as sensors and lenses that are optimized for perceiving objects that are far away.

Another input 502d is a traffic light detection (TLD) system. A TLD system uses one or more cameras to obtain information about traffic lights, street signs, and other physical objects that provide visual navigation information. A TLD system produces TLD data as output 504d. TLD data often takes the form of image data (e.g., data in an image data format such as RAW, JPEG, PNG, etc.). A TLD system differs from a system incorporating a camera in that a TLD system uses a camera with a wide field of view (e.g., using a wide-angle lens or a fish-eye lens) in order to obtain information about as many physical objects providing visual navigation information as possible, so that the AV 100 has access to all relevant navigation information provided by these objects. For example, the viewing angle of the TLD system may be about 120 degrees or more.

In some embodiments, outputs 504a-d are combined using a sensor fusion technique. Thus, either the individual outputs 504a-d are provided to other systems of the AV 100 (e.g., provided to a planning module 404 as shown in FIG. 4), or the combined output can be provided to the other systems, either in the form of a single combined output or multiple combined outputs of the same type (e.g., using the same combination technique or combining the same outputs or both) or different types type (e.g., using different respective combination techniques or combining different respective outputs or both). In some embodiments, an early fusion technique is used. An early fusion technique is characterized by combining outputs before one or more data processing steps are applied to the combined output. In some embodiments, a late fusion technique is used. A late fusion technique is characterized by combining outputs after one or more data processing steps are applied to the individual outputs.

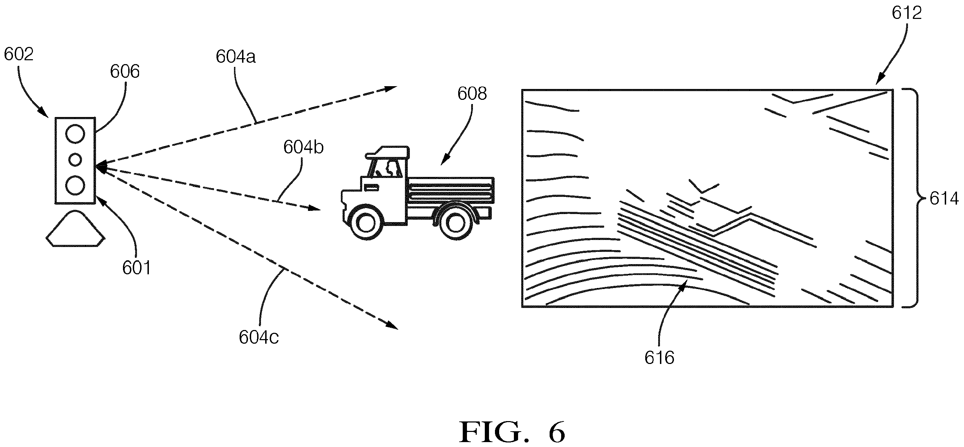

FIG. 6 shows an example of a LiDAR system 602 (e.g., the input 502a shown in FIG. 5). The LiDAR system 602 emits light 604a-c from a light emitter 606 (e.g., a laser transmitter). Light emitted by a LiDAR system is typically not in the visible spectrum; for example, infrared light is often used. Some of the light 604b emitted encounters a physical object 608 (e.g., a vehicle) and reflects back to the LiDAR system 602. (Light emitted from a LiDAR system typically does not penetrate physical objects, e.g., physical objects in solid form.) The LiDAR system 602 also has one or more light detectors 610, which detect the reflected light. In an embodiment, one or more data processing systems associated with the LiDAR system generates an image 612 representing the field of view 614 of the LiDAR system. The image 612 includes information that represents the boundaries 616 of a physical object 608. In this way, the image 612 is used to determine the boundaries 616 of one or more physical objects near an AV.

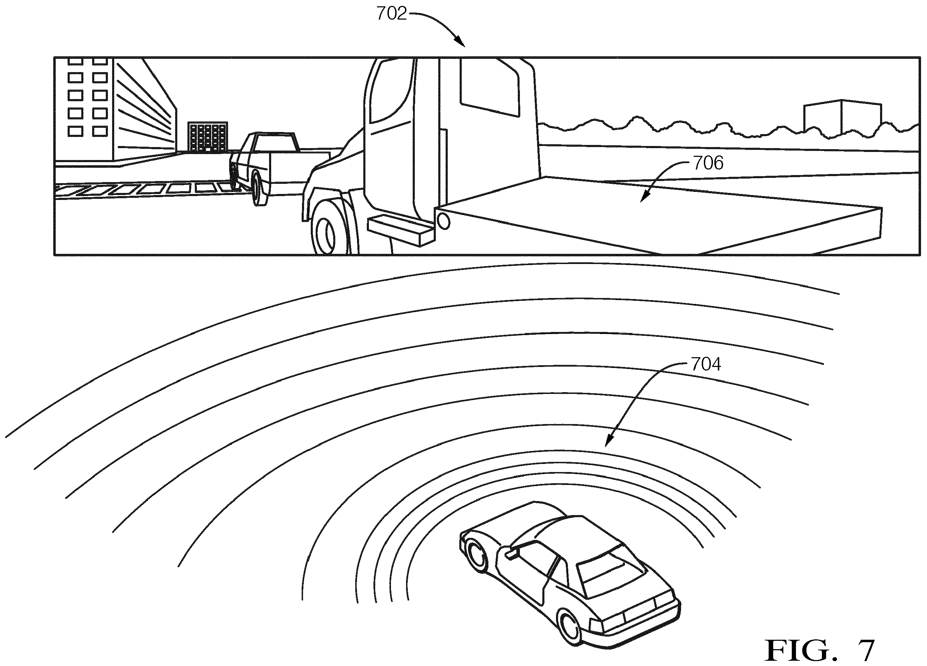

FIG. 7 shows the LiDAR system 602 in operation. In the scenario shown in this figure, the AV 100 receives both camera system output 504c in the form of an image 702 and LiDAR system output 504a in the form of LiDAR data points 704. In use, the data processing systems of the AV 100 compares the image 702 to the data points 704. In particular, a physical object 706 identified in the image 702 is also identified among the data points 704. In this way, the AV 100 perceives the boundaries of the physical object based on the contour and density of the data points 704.

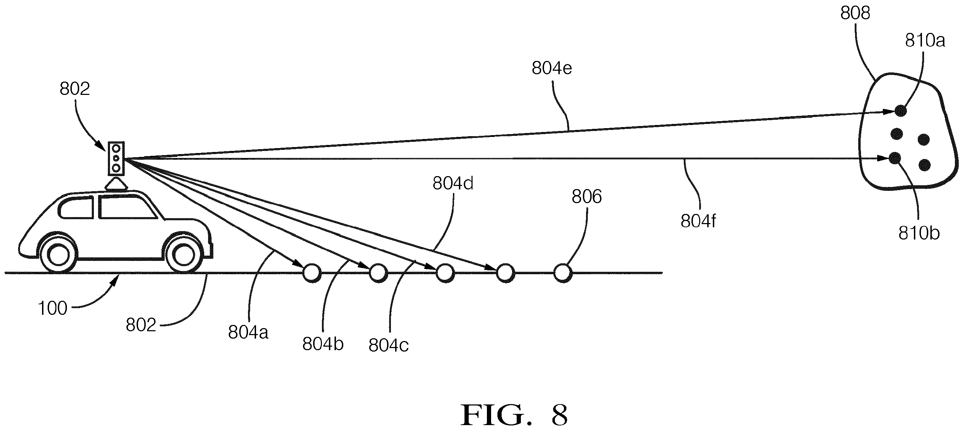

FIG. 8 shows the operation of the LiDAR system 602 in additional detail. As described above, the AV 100 detects the boundary of a physical object based on characteristics of the data points detected by the LiDAR system 602. As shown in FIG. 8, a flat object, such as the ground 802, will reflect light 804a-d emitted from a LiDAR system 602 in a consistent manner. Put another way, because the LiDAR system 602 emits light using consistent spacing, the ground 802 will reflect light back to the LiDAR system 602 with the same consistent spacing. As the AV 100 travels over the ground 802, the LiDAR system 602 will continue to detect light reflected by the next valid ground point 806 if nothing is obstructing the road. However, if an object 808 obstructs the road, light 804e-f emitted by the LiDAR system 602 will be reflected from points 810a-b in a manner inconsistent with the expected consistent manner. From this information, the AV 100 can determine that the object 808 is present.

### Path Planning

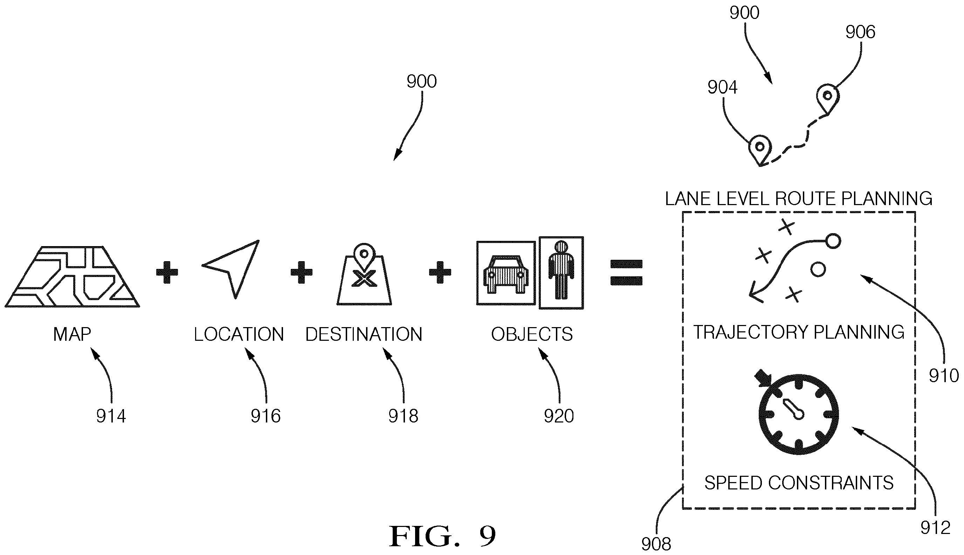

FIG. 9 shows a block diagram 900 of the relationships between inputs and outputs of a planning module 404 (e.g., as shown in FIG. 4). In general, the output of a planning module 404 is a route 902 from a start point 904 (e.g., source location or initial location), and an end point 906 (e.g., destination or final location). The route 902 is typically defined by one or more segments. For example, a segment is a distance to be traveled over at least a portion of a street, road, highway, driveway, or other physical area appropriate for automobile travel. In some examples, e.g., if the AV 100 is an off-road capable vehicle such as a four-wheel-drive (4WD) or all-wheel-drive (AWD) car, SUV, pick-up truck, or the like, the route 902 includes "off-road" segments such as unpaved paths or open fields.

In addition to the route 902, a planning module also outputs lane-level route planning data 908. The lane-level route planning data 908 is used to traverse segments of the route 902 based on conditions of the segment at a particular time. For example, if the route 902 includes a multi-lane highway, the lane-level route planning data 908 includes trajectory planning data 910 that the AV 100 can use to choose a lane among the multiple lanes, e.g., based on whether an exit is approaching, whether one or more of the lanes have other vehicles, or other factors that vary over the course of a few minutes or less. Similarly, in some implementations, the lane-level route planning data 908 includes speed constraints 912 specific to a segment of the route 902. For example, if the segment includes pedestrians or un-expected traffic, the speed constraints 912 may limit the AV 100 to a travel speed slower than an expected speed, e.g., a speed based on speed limit data for the segment.

In an embodiment, the inputs to the planning module 404 includes database data 914 (e.g., from the database module 410 shown in FIG. 4), current location data 916 (e.g., the AV position 418 shown in FIG. 4), destination data 918 (e.g., for the destination 412 shown in FIG. 4), and object data 920 (e.g., the classified objects 416 as perceived by the perception module 402 as shown in FIG. 4). In some embodiments, the database data 914 includes rules used in planning. Rules are specified using a formal language, e.g., using Boolean logic. In any given situation encountered by the AV 100, at least some of the rules will apply to the situation. A rule applies to a given situation if the rule has conditions that are met based on information available to the AV 100, e.g., information about the surrounding environment. Rules can have priority. For example, a rule that says, "if the road is a freeway, move to the leftmost lane" can have a lower priority than "if the exit is approaching within a mile, move to the rightmost lane."

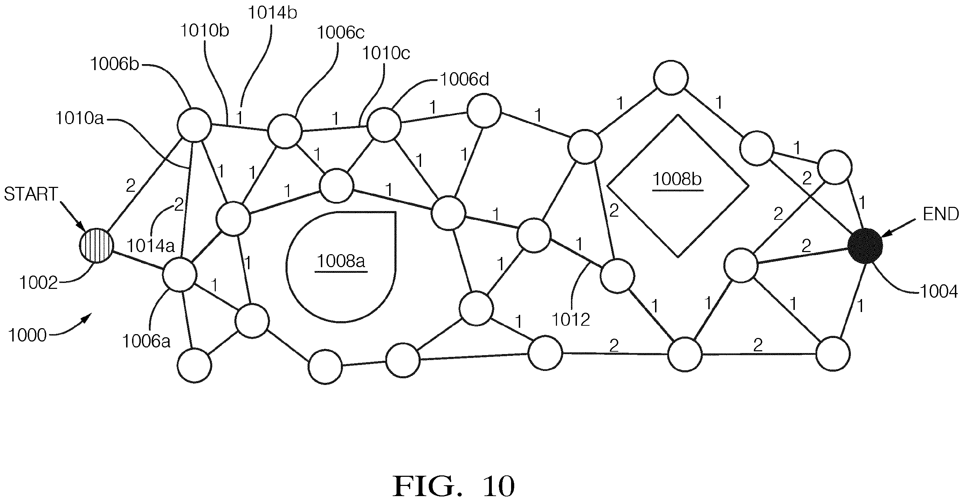

FIG. 10 shows a directed graph 1000 used in path planning, e.g., by the planning module 404 (FIG. 4). In general, a directed graph 1000 like the one shown in FIG. 10 is used to determine a path between any start point 1002 and end point 1004. In real-world terms, the distance separating the start point 1002 and end point 1004 may be relatively large (e.g., in two different metropolitan areas) or may be relatively small (e.g., two intersections abutting a city block or two lanes of a multi-lane road).

In an embodiment, the directed graph 1000 has nodes 1006a-d representing different locations between the start point 1002 and the end point 1004 that could be occupied by an AV 100. In some examples, e.g., when the start point 1002 and end point 1004 represent different metropolitan areas, the nodes 1006a-d represent segments of roads. In some examples, e.g., when the start point 1002 and the end point 1004 represent different locations on the same road, the nodes 1006a-d represent different positions on that road. In this way, the directed graph 1000 includes information at varying levels of granularity. In an embodiment, a directed graph having high granularity is also a subgraph of another directed graph having a larger scale. For example, a directed graph in which the start point 1002 and the end point 1004 are far away (e.g., many miles apart) has most of its information at a low granularity and is based on stored data, but also includes some high granularity information for the portion of the graph that represents physical locations in the field of view of the AV 100.

The nodes 1006a-d are distinct from objects 1008a-b which cannot overlap with a node. In an embodiment, when granularity is low, the objects 1008a-b represent regions that cannot be traversed by automobile, e.g., areas that have no streets or roads. When granularity is high, the objects 1008a-b represent physical objects in the field of view of the AV 100, e.g., other automobiles, pedestrians, or other entities with which the AV 100 cannot share physical space. In an embodiment, some or all of the objects 1008a-b are a static objects (e.g., an object that does not change position such as a street lamp or utility pole) or dynamic objects (e.g., an object that is capable of changing position such as a pedestrian or other car).

The nodes 1006a-d are connected by edges 1010a-c. If two nodes 1006a-b are connected by an edge 1010a, it is possible for an AV 100 to travel between one node 1006a and the other node 1006b, e.g., without having to travel to an intermediate node before arriving at the other node 1006b. (When we refer to an AV 100 traveling between nodes, we mean that the AV 100 travels between the two physical positions represented by the respective nodes.) The edges 1010a-c are often bidirectional, in the sense that an AV 100 travels from a first node to a second node, or from the second node to the first node. In an embodiment, edges 1010a-c are unidirectional, in the sense that an AV 100 can travel from a first node to a second node, however the AV 100 cannot travel from the second node to the first node. Edges 1010a-c are unidirectional when they represent, for example, one-way streets, individual lanes of a street, road, or highway, or other features that can only be traversed in one direction due to legal or physical constraints.

In an embodiment, the planning module 404 uses the directed graph 1000 to identify a path 1012 made up of nodes and edges between the start point 1002 and end point 1004.

An edge 1010a-c has an associated cost 1014a-b. The cost 1014a-b is a value that represents the resources that will be expended if the AV 100 chooses that edge. A typical resource is time. For example, if one edge 1010a represents a physical distance that is twice that as another edge 1010b, then the associated cost 1014a of the first edge 1010a may be twice the associated cost 1014b of the second edge 1010b. Other factors that affect time include expected traffic, number of intersections, speed limit, etc. Another typical resource is fuel economy. Two edges 1010a-b may represent the same physical distance, but one edge 1010a may require more fuel than another edge 1010b, e.g., because of road conditions, expected weather, etc.

When the planning module 404 identifies a path 1012 between the start point 1002 and end point 1004, the planning module 404 typically chooses a path optimized for cost, e.g., the path that has the least total cost when the individual costs of the edges are added together.

### Autonomous Vehicle Control

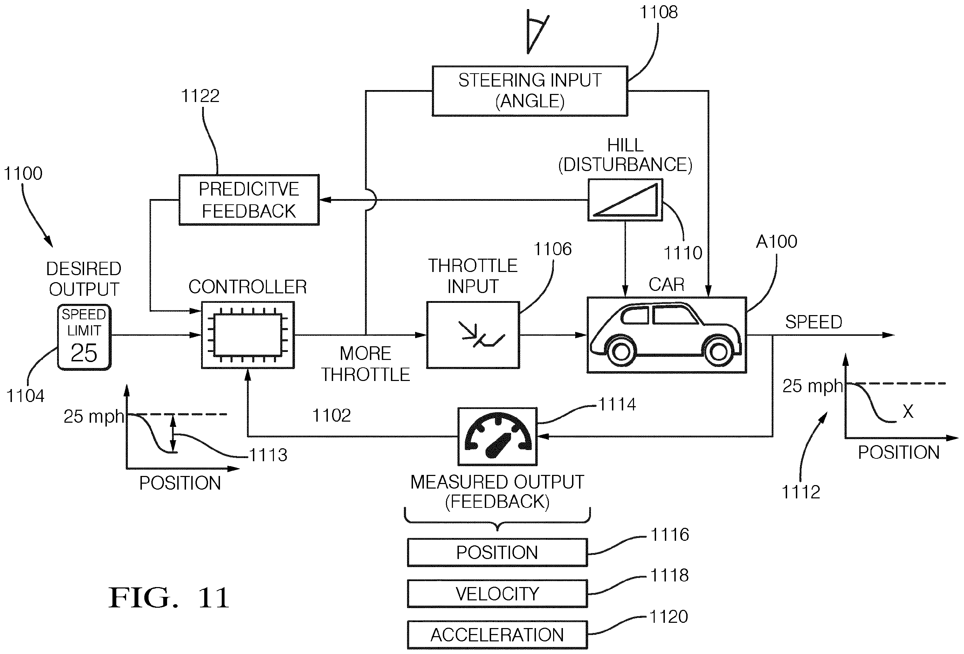

FIG. 11 shows a block diagram 1100 of the inputs and outputs of a control module 406 (e.g., as shown in FIG. 4). A control module operates in accordance with a controller 1102 which includes, for example, one or more processors (e.g., one or more computer processors such as microprocessors or microcontrollers or both) similar to processor 304, short-term and/or long-term data storage (e.g., memory random-access memory or flash memory or both) similar to main memory 306, ROM 308, and storage device 210, and instructions stored in memory that carry out operations of the controller 1102 when the instructions are executed (e.g., by the one or more processors).

In an embodiment, the controller 1102 receives data representing a desired output 1104. The desired output 1104 typically includes a velocity, e.g., a speed and a heading. The desired output 1104 can be based on, for example, data received from a planning module 404 (e.g., as shown in FIG. 4). In accordance with the desired output 1104, the controller 1102 produces data usable as a throttle input 1106 and a steering input 1108. The throttle input 1106 represents the magnitude in which to engage the throttle (e.g., acceleration control) of an AV 100, e.g., by engaging the steering pedal, or engaging another throttle control, to achieve the desired output 1104. In some examples, the throttle input 1106 also includes data usable to engage the brake (e.g., deceleration control) of the AV 100. The steering input 1108 represents a steering angle, e.g., the angle at which the steering control (e.g., steering wheel, steering angle actuator, or other functionality for controlling steering angle) of the AV should be positioned to achieve the desired output 1104.

In an embodiment, the controller 1102 receives feedback that is used in adjusting the inputs provided to the throttle and steering. For example, if the AV 100 encounters a disturbance 1110, such as a hill, the measured speed 1112 of the AV 100 is lowered below the desired output speed. In an embodiment, any measured output 1114 is provided to the controller 1102 so that the necessary adjustments are performed, e.g., based on the differential 1113 between the measured speed and desired output. The measured output 1114 includes measured position 1116, measured velocity 1118, (including speed and heading), measured acceleration 1120, and other outputs measurable by sensors of the AV 100.

In an embodiment, information about the disturbance 1110 is detected in advance, e.g., by a sensor such as a camera or LiDAR sensor, and provided to a predictive feedback module 1122. The predictive feedback module 1122 then provides information to the controller 1102 that the controller 1102 can use to adjust accordingly. For example, if the sensors of the AV 100 detect ("see") a hill, this information can be used by the controller 1102 to prepare to engage the throttle at the appropriate time to avoid significant deceleration.

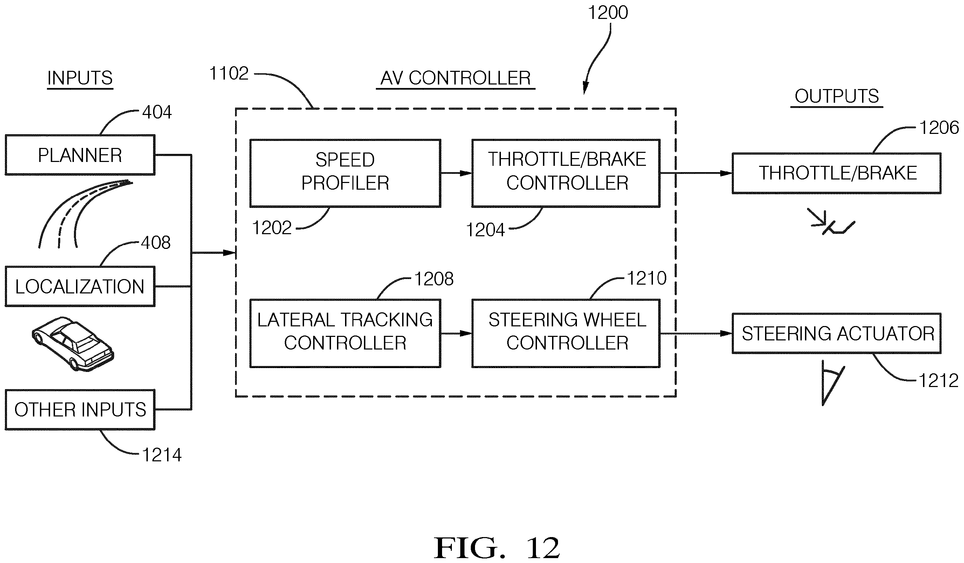

FIG. 12 shows a block diagram 1200 of the inputs, outputs, and components of the controller 1102. The controller 1102 has a speed profiler 1202 which affects the operation of a throttle/brake controller 1204. For example, the speed profiler 1202 instructs the throttle/brake controller 1204 to engage acceleration or engage deceleration using the throttle/brake 1206 depending on, e.g., feedback received by the controller 1102 and processed by the speed profiler 1202.

The controller 1102 also has a lateral tracking controller 1208 which affects the operation of a steering controller 1210. For example, the lateral tracking controller 1208 instructs the steering controller 1210 to adjust the position of the steering angle actuator 1212 depending on, e.g., feedback received by the controller 1102 and processed by the lateral tracking controller 1208.

The controller 1102 receives several inputs used to determine how to control the throttle/brake 1206 and steering angle actuator 1212. A planning module 404 provides information used by the controller 1102, for example, to choose a heading when the AV 100 begins operation and to determine which road segment to traverse when the AV 100 reaches an intersection. A localization module 408 provides information to the controller 1102 describing the current location of the AV 100, for example, so that the controller 1102 can determine if the AV 100 is at a location expected based on the manner in which the throttle/brake 1206 and steering angle actuator 1212 are being controlled. In an embodiment, the controller 1102 receives information from other inputs 1214, e.g., information received from databases, computer networks, etc.

### Transportation system and method

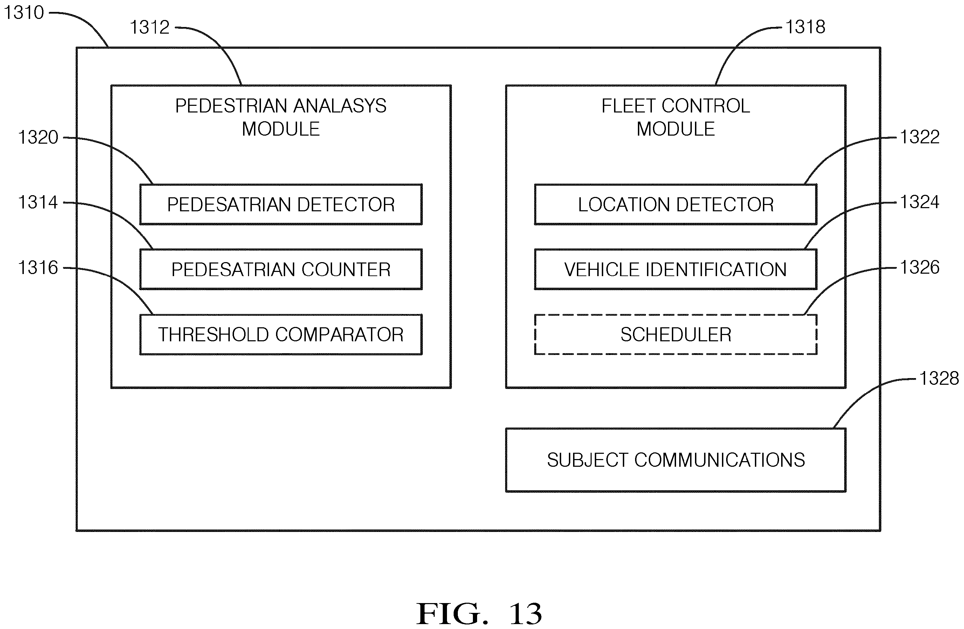

FIG. 13 shows one non-limiting example of a crowd detection module 1310 that automatically identifies of a group or crowd of pedestrians travelling to a destination, and, in response to identifying the crowd of pedestrians, causes one or more transport vehicles to travel to one or more locations along a path of the identified crowd and/or to otherwise offer pedestrians of the identified crowd one or more transportation options. As used herein, the term "pedestrian" refers to any person travelling using non-automotive means, such as walking, running, cycling, operating a scooter, using public transportation (e.g., travelling via subway, airplane, bus, light rail, railroad, etc.), or the like. As used herein, the term "transport vehicle" refers to any form of automobile-based transportation, whether human operated, semi-autonomous, or autonomous, i.e. fully automated or driverless. For example, a human operated transport vehicle may include traditional forms of transportation such as a human operated taxi, shuttle, or bus. In other examples, a human operated transport vehicle may include a human operated automobile utilizing a ride-sharing mobile application such as Uber or Lyft.

As described above, in response to identifying a crowd of pedestrians, crowd detection module 1310 may cause one or more transport vehicles to travel to a location and/or offer rides to one or more pedestrians. According to examples where such a transport vehicle is human operated, crowd detection module 1310 causes one or more messages or vehicle instructions to be communicated to the human operator, who then directs the vehicle consistent with the instructions. According to examples where such a transport vehicle is autonomously or semi-autonomously driven, crowd detection module 1310 may communicate one or more messages or instructions to control logic associated with the autonomous functionality of the transport vehicle, and the control logic operates the vehicle to travel consistent with the received instructions (e.g., via planning module 404 depicted in FIG. 4). According to other examples, crowd detection module 1310 may itself control operation of the vehicle to travel consistent with received instructions. FIGS. 1 through 12, and the associated descriptions of those figures provided above, are non-limiting examples of how operation of such a transport vehicle could be provided.

Crowd detection module 1310 as described herein comprises a plurality of individual modules 1312, 1314, 1316, 1318, 1320, 1322, 1324, 1326, 1328, 1330, 1332 that each perform respective functions or functionality associated with operation of crowd detection module 1310. Each of the respective modules described herein may be implemented via hardware, software, firmware, and the like, or any combination thereof. In cases where the described modules are implemented in software and/or firmware, the respective modules described herein may comprise program instructions stored in a tangible medium (e.g., short term memory, long term storage, and the like) and executable by one or more processors to implement the functionality described herein. According to examples where respective modules of crowd detection module 1310 are implemented in software, the respective modules may comprise separate instructions which may be executed by a single processor device, or multiple discrete processor devices, which may reside in a single location (e.g., within the electrical system of a transport vehicle), or multiple distributed locations communicatively coupled to one another via a network.

As described above, crowd detection module 1310 is useful to, for example, cause one or more transport vehicles to go to one or more locations where numerous pedestrians are traveling in the same general direction, for example, towards a destination. Alternatively, one or more transport vehicles may already be at such a location when an offer of transportation is conveyed. Crowd detection module 1310 causes the offer of transportation to be conveyed to one or more pedestrians identified as traveling in the same general direction. The offer of transportation may be conveyed before or after the one or more transport vehicles arrive at the location.

Crowd detection module 1310 includes a pedestrian analysis module 1312. Pedestrian analysis module 1312 operates to analyze pedestrians to determine the existence of a crowd condition. As shown in FIG. 13, pedestrian analysis module 1312 includes a pedestrian detector 1320, a pedestrian counter 1314, and a threshold comparator 1316. Pedestrian detector 1320 automatically distinguishes pedestrians from other objects based on received data. In some examples, such data may be received from one or more sensors (e.g., sensors 121 depicted in FIG. 1). In other examples, such data may be received from one or more sensors or systems external to a transport vehicle.

In some examples, pedestrian detector 1320 may receive visual data, such as recorded still or video images (captured by infrared, visible light, or other form of camera), audio data, GPS location data, and/or data from radar, lidar, ultrasonic transducers, pressure/weight detection on walkways, proximity (e.g. capacitance) detectors that detect moving objects passing nearby (e.g. less than one meter) the proximity detector, interrupted/blocked light beams, RF identification tags or signals from personal communication devices (e.g. smart phone), near field communication devices, and/or other data to identify pedestrians travelling within an area.

Pedestrian detector 1320 analyzes the received data to identify pedestrians based on the received data. According to one non-limiting example, pedestrian detector 1320 receives, from one or more camera sensors, data reflecting captured video or still images of a pedestrian walkway (e.g., a sidewalk). Pedestrian detector 1320 analyzes the received data to distinguish pedestrians from other objects in the captured video or still images using known techniques for image processing. For example, pedestrian detector 1320 may distinguish a pedestrian from other non-pedestrian objects based on size, shape, movement, location, temperature, electromagnetic energy reflectivity, or other characteristics. In some examples, pedestrian detector 1320 may analyze received data and generate an indication of pedestrians travelling in one or more areas. Pedestrian detector 1320 may receive data from infrastructure devices such as traffic cameras, or on-vehicle perception sensors (e.g. one or more instance of a camera, radar, lidar, or any combination thereof) mounted on the transportation vehicles sent to pick up the pedestrians, or on any other vehicles present in the vicinity of the pedestrians.

Pedestrian analysis module 1312 includes a pedestrian counter 1314. Pedestrian counter 1314 receives an indication of pedestrians identified by pedestrian detector 1320, and determines a count of pedestrians that may be travelling as a crowd (i.e., a crowd condition) based on the identified pedestrians. For example, pedestrian counter 1314 may determine a number or count of pedestrians travelling in a direction in a defined area. According to such examples, the defined area may include one or more pedestrian pathways (e.g., a sidewalk), an area of a city (e.g., one or more city blocks), various forms of public transportation (e.g. train or subway), or other designation of a region where pedestrians may travel. As one non-limiting example, pedestrian counter 1314 determines a count of pedestrians travelling on a sidewalk along a street in the same direction. In other non-limiting examples, pedestrian counter may also (or instead), determine a count of identified pedestrians that pass by a same geographical location, a count of pedestrians travelling in the same public transportation vehicle (e.g., the same subway, light rail, bus, etc.) and/or a count of pedestrians travelling in proximity to one another. In another example, pedestrian counter 1314 determines the crowd condition based on social media friends travelling in proximity to one another as friends are more likely than strangers to be traveling together.

As shown in FIG. 13, pedestrian analysis module 1312 further includes a threshold comparator 1316. Threshold comparator 1316 receives the count of pedestrians as described above, and compares the received count to one or more thresholds to determine whether a crowd condition exists.

Threshold comparator 1316 identifies a crowd condition based on a threshold (or thresholds) consistent with a likelihood that one or more of the pedestrians travelling in the identified crowd desire, or may be persuaded to use, a transport vehicle to travel to a destination. In some examples, threshold comparator 1316 utilizes a static threshold that identifies a minimum number of pedestrians travelling together (as identified above). As one non-limiting example, threshold comparator 1316 identifies the pedestrians as a crowd condition if a number or count of pedestrians travelling together is greater than twenty.

In other examples, threshold comparator 1316 identifies pedestrians based on one or more variable thresholds. For example, such a threshold may vary based on a geographical location in which pedestrians are detected. For example, in a rural environment, threshold comparator 1316 may identify pedestrians as a crowd if the number of pedestrians is greater than ten. However, in a dense urban environment, threshold comparator 1316 may identify pedestrians as a crowd if the number of pedestrians is greater than fifty, or even one-thousand. In still other examples, threshold comparator 1316 may adjust one or more thresholds based on weather conditions. As specific non-limiting examples, threshold comparator 1316 may decrease a count threshold if it is raining on the identified pedestrians, if the ambient temperature is less than 5°C, and/or if it is dark outside. As one specific example, threshold comparator 1316 may decrease the count by a predetermined factor (e.g., 2) or amount based on such an adverse weather condition.

In still other examples, threshold comparator 1316 identifies pedestrians based on more than just a count of pedestrians determined as described above. For example, in an urban environment with heavy pedestrian traffic, pedestrian counter 1314 determines a count of pedestrians travelling along the same path in a first direction, and determines a count of pedestrians travelling along the path in a second direction different than the first. According to this example, if the count of pedestrians travelling in the first direction is greater than the count of pedestrians travelling in the second direction by a defined percentage, pedestrian counter 1314 identifies a crowd condition. In some examples, such a percentage-based threshold may be a static value. In other examples, such a percentage-based threshold may be adaptable based on surroundings (e.g., pedestrian counter 1314 may utilize a higher percentage-based threshold in an urban area than a rural area).

In some examples, threshold comparator 1316 may compare a count of pedestrians associated with a specific geographical area for purposes of identifying a crowd condition. For example, threshold comparator 1316 may compare a count of pedestrians travelling along a length of road (e.g., 100 meters of sidewalk), and if the count of pedestrians travelling on that specified length of roads exceeds one or more thresholds, identify a crowd condition. In other examples, threshold comparator 1316 may compare a count of pedestrians travelling within a predetermined area (e.g., a city block or blocks), and if the count of pedestrians travelling within that predetermined area exceeds one or more thresholds, identify a crowd condition.

In still other examples, threshold comparator 1316 may identify a crowd condition based on other factors than a count of pedestrians. For example, based on a determined count of pedestrians, threshold comparator 1316 may determine a density (number of pedestrians per unit area), and identify a crowd condition if the determined density exceeds a density threshold.

In some examples, pedestrian analysis module 1312 may determine that a crowd condition exists on multiple paths. Pedestrian counter 1314 may count pedestrians on each of the multiple paths, and compare them to one or more thresholds (the same or different), and independently verify for each path whether a crowd condition exists, or identify a crowd condition based on the multiple paths in combination. In some examples, threshold comparator 1316 uses different thresholds to account for multiple paths (in comparison to a single path). For example, when attempting to identify a crowd condition taking into account multiple paths, pedestrian counter 1314 may count a number of pedestrians and compare the determined count to an overall threshold to identify a crowd condition. In other examples, threshold comparator 1316 may use individual thresholds for each respective path, and independently determine whether a crowd condition exists on each of the multiple paths. Multiple paths may include multiple destinations. For example, a crowd of people traveling from a train station toward multiple adjacent entertainment venues (e.g. multiple music venues across the street from each other) may be identified as a crowd condition.

As shown in FIG. 13, crowd detection module 1310 further includes a fleet control module 1318. Fleet control module 1318 is operable to instruct or otherwise cause one or more transport vehicles to travel to one or more locations based on, or in response to, the identification of a crowd condition by pedestrian analysis module 1312. The one or more locations may include one or more locations along a path traveled by identified pedestrians, an origination location from which the pedestrians begin to travel in and/or, in some examples, a destination of the identified pedestrians, as described in further detail below.

Fleet control module 1318 includes location director 1322. Location director 1322 determines where the one or more transport vehicles should be sent to pick up the identified pedestrians. Locations may be specified by an address or GPS coordinates where pedestrians can be picked up and/or dropped off.

As one non-limiting example, fleet control module 1318 causes one or more transport vehicles to go to a designated pick up/drop off zone proximate to a sidewalk, designated walkway, or path on which the identified pedestrians are traveling. In another example, identified pedestrians may be traveling in a subway or train. Fleet control module 1318 may cause one or more transportation vehicles to go to a location adjacent to or proximate to a train or subway station where the identified pedestrians are expected to disembark from the subway or train.

Fleet control module 1318 further includes a vehicle identification module 1324. Vehicle identification module 1324 identifies one or more transport vehicles to direct to a location specified by location director 1322. For example, vehicle identification module may determine how many, which type, and/or to which of one or more pickup location one or more transport vehicles should go. For example, Vehicle identification module 1324 may determines a number of transport vehicles, based on a carrying capacity of the transport vehicles, sufficient to transport the number of pedestrians identified by pedestrian counter 1314.

As also depicted in FIG. 13, fleet control module 1318 may optionally include a scheduler 1326. Scheduler 1326 may, in some cases, schedule the instruction of one or more transport vehicles to travel to a particular location associated with a detected crowd condition in the future, as opposed to immediately upon identification of a crowd condition. For example, in some cases, crowd detection module 1310 may, in response to identifying a crowd condition, instead of (or in addition to) immediately instructing one or more transport vehicles to travel to a location associated with the detected crowd condition, schedule such instructions to be communicated at some point in the future. In one such example, in response to identifying a crowd condition, scheduler 1326 attempts to determine a likely event (or events) that pedestrians of the crowd are travelling to, and attempt to identify a likely end time for the event. Scheduler 1326 may schedule the transportation vehicles to arrive at the destination (of pedestrians of the detected cloud event) based on when an event at the destination ends.

Scheduler 1326 may scan online (e.g., news, event web sites, social media, etc.) to search for any published events that correspond to a direction of a crowd associated with an identified crowd condition. For example, scheduler 1326 may scan online to determine whether any sporting events, concerts, political rallies, conferences, or other events associated with the identified crowd condition may be travelling to based on a location and/or direction travelled by the identified pedestrians.

In some examples, scheduler 1326 may identify more than one event with a location consistent with a travelling path of pedestrians of an identified crowd condition. In some such examples, scheduler may attempt to identify a destination of highest likelihood for the travelling pedestrians, based on scanning social media, consumer purchases (e.g., a ticket purchase) of travelling pedestrians, or other information. As another example, scheduler 1326 may be configured to process imaging data of pedestrians associated with an identified crowd condition to identify any distinguishing clothing or accessories that may indicate a destination associated with a crowd. For example, scheduler 1326 may analyze clothing of pedestrians, to determine a likelihood that they are travelling to a particular sporting event.

In some examples, scheduler 1326 may instead or in addition consider empirical data on similar past events to determine when to cause transport vehicles to be available at an identified destination. For example, scheduler 1326 may review data representing reported ticket sales for each of multiple events, and identify a destination for travelling pedestrians based on which of the multiple events have the highest ticket sales. As another example, scheduler 1326 may determine a maximum capacity for each venue associated with the multiple events, and identify a destination for the travelling pedestrians based on which event is at the venue with the highest capacity. As another example, scheduler 1326 may identify a destination for travelling pedestrians based on a number of people are posting about each respective event.

For example, scheduler 1326 may review empirical data indicating how many event participants leave an event before a designated end time (e.g., the end of a game) for similar events that occurred in the past (e.g., a football game at the same venue), and cause transport vehicles to go to a pickup site at a time that "early leavers" typically exit the destination venue. In some examples, scheduler 1326 may cause a first group of transport vehicles to travel to the destination before the event ends to pick up the predicted early leavers, and then send a second group of transport vehicle at the actual conclusion of the event at the destination. In still other examples, scheduler 1326 may also monitor the score of a sports event as a large score differential may be an indication that pedestrians will leave the game early, and cause transport vehicles to travel to the destination at an earlier time based on the score differential.

Crowd detection module 1310 further includes subject communications module 1328. Subject communications module 1328 operates in one or more ways to communicate or convey an offer of transportation to one or more subjects (i.e., pedestrians identified as part of a crowd condition. Subject communications module 1328 may communicate the offer long before or as the transport vehicles approach a suitable pickup location, or after the vehicles are parked but before or as the pedestrians arrive at the pickup location. Subject communications module 1328 may communicate the offer via a mobile device communicator (not shown), e.g. a transceiver that communicates with one or more mobile devices such as a smart phone, watch, tablet, and/or wearable device carried by one or more of the identified pedestrians. The offer may be in the form of a text message, e-mail, or other message sent to an application program (app) present on the mobile device. Alternatively, or in addition to communication with the mobiles device, subject communications module 1328 may include a non-mobile device (not shown) to communicate the offer of transportation. The non-mobile device may be configured to cause a message to be communicated via a display (e.g. a computer monitor) mounted on a transport vehicle or a public display (e.g., electronic billboard, stadium display, emergency service display) in a position viewable by one or more pedestrians associated with an identified crowd condition. Alternatively, or additional, the non-mobile device may be a speaker mounted on the vehicle or proximate to the path, and/or various lights and/or the horn of a transport vehicle.

The offer conveyed by subject communications module 1328 may be in many forms. For example, the non-mobile device may communicate with a display on the vehicle operated to depict a message "We are offering rides," or "We notice you are walking, do you need a ride?" Another example is "We notice you are walking, and that EVENT X is in the direction you are walking. Do you need a ride to EVENT X?" Alternatively, or in addition to the non-mobile device displaying a message, the mobile device communicator may cause a message to be displayed on the mobile device of a pedestrian such as "Are you travelling to event X (Y/N)? If the mobile device receives user input indicating YES, communications module may present a second message stating, "Do you need a ride to EVENT X?"

Scheduler 1326 and subject communications module 1328 may cooperate to schedule a pickup time in the future by conveying a message that requires a response such as "We notice you are travelling, and may be travelling to event X. We estimate event X will end between time A and time B. Would you like to schedule a pickup?" A possible message that does not require a response is "We notice you travelling, and may be travelling to event X. Should you desire transport upon completion of the event, we will have transport vehicles in the area between time A and time B should you desire transport."

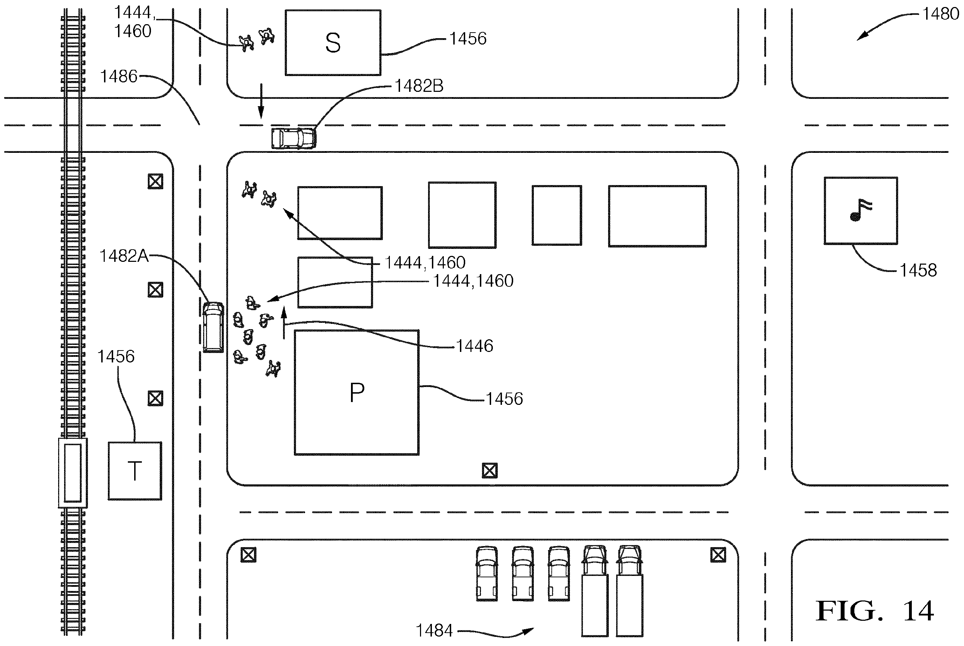

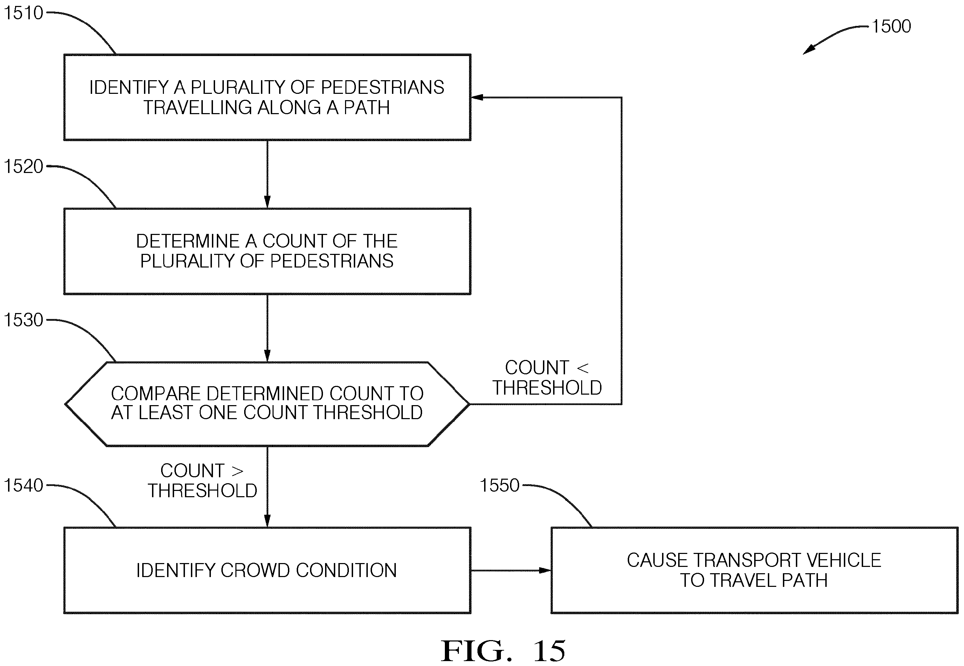

FIG. 14 illustrates one non-limiting example of scenario 1480 where crowd detection module 1310 (FIG. 13) and method 1500 (FIG. 15) may be useful. Scenario 1480 depicts a plurality of pedestrians 1444 traveling on a path 1446 to a destination 1458. Pedestrian analysis module 1312 attempts to determine whether pedestrians 1444 qualify as a crowd condition. According to the example of FIG. 14, pedestrians 1444 may be travelling from a variety of origination locations 1456. Origination locations 1456 include, but are not limited to, a train station T, a parking structure P, a subway station S, or from within the various vehicles (train, car, subway) that brought one or more of pedestrians 1444 to those structures, or even from the homes of pedestrians 1444. Pedestrian detector 1320 analyses various sensor data received by pedestrian detector 1320 to classify one or more objects as pedestrians as described above. Pedestrian counter 1314 analyses the objects classified as pedestrian to determine a count of pedestrians. As described above, pedestrian counter 1314 may count identified pedestrians based on a predetermined geographical area (e.g., a length of road or sidewalk, one or more city blocks), to determine a number of identified pedestrians. As also described above, pedestrian counter 1314 may count identified pedestrians by determining a density of the identified pedestrians.

Threshold comparator 1316 compares the determined count 1460 to one or more static or variable threshold values as described above with respect to FIG. 13 to determine whether a crowd condition exists. In response to determining a crowd condition exists, fleet control module 1318 causes one or more vehicles 1482A, 1482B to travel to a location along a path 1446 of the pedestrians associated with the crowd condition. In some examples, subject communications module 1328 operates to convey an offer (not shown) to transport pedestrians 1444 to destination 1458. In some examples, the offer may be an offer communicated via a mobile device of one or more subject pedestrians. In other examples, the offer may be communicated via one or more non-mobile devices. For example, the offer may be conveyed to pedestrians 1444 by one of more of many techniques. As one example, a display (not shown in FIG. 14) mounted on vehicle 1482A and/or vehicle 1482B to be viewable by pedestrians 1444 may be operated to convey the offer to pedestrians 1444.

It is notable that, according to the various techniques described herein, vehicles 1482A, 1482B are not caused to travel to the locations of the pedestrians 1444 illustrated as the result of some action by any of pedestrians 1444 (e.g., requesting a transport vehicle via phone, text message, mobile application, etc.). Instead, crowd detection module 1310 causes transport vehicles 1482A, 1482B to travel to pedestrians 1444 in response to identifying a crowd condition as described above.

In some examples, as described above, crowd detection module 1310 may further include a scheduler 1326 that, in response to identifying a crowd condition, automatically identifies a likely destination for pedestrians associated with the crowd condition, determines a likely departure time for the pedestrians associated with the identified crowd condition, and causes one or more transport vehicles to travel to the likely destination at the likely departure time.

FIG. 15 is a flow diagram depicting one example of a method 1500 of automatically identifying a crowd of pedestrians consistent with one or more aspects of this disclosure. As shown in FIG. 15, the method 1500 includes identifying (e.g., by pedestrian counter 1314 depicted in FIG. 13) a plurality of pedestrians travelling on a path (step 1510). In some examples, identifying the one or more pedestrians based on data representing one or more pedestrians travelling along a path. For example, identifying the one or more pedestrians may include processing image data of a path captured by one or more camera devices, and processing that image data to distinguish pedestrians from other objects in the image data.

As also shown in FIG. 15, the method 1500 further includes determining (e.g., via pedestrian counter 1314 depicted in FIG. 13), a count of the plurality of pedestrians travelling along the path (step 1520).

As also shown in FIG. 15, the method 1500 further includes comparing (e.g., via threshold comparator 1316 depicted in FIG. 13) the determined count of pedestrians to at least one count threshold (step 1530). For example, the method 1500 may include comparing the determined count of pedestrians to a fixed threshold. According to other examples, the method 1500 includes comparing the determined count of pedestrians to a variable threshold. In some examples, the method 1500 includes comparing a count of pedestrians travelling in a predetermined geographical area (e.g., a length of road/sidewalk, one or more city blocks) to a threshold. In still other examples, the method 1500 includes comparing a density of identified pedestrians to a threshold.

As also shown in FIG. 15, the method 1500 further includes, in response to the count exceeding the count threshold value, identifying a crowd condition (step 1540). As also shown in FIG. 15, in response to identifying the crowd condition, causing (e.g., via fleet control module 1318 depicted in FIG. 13) at least one transport vehicle to travel to at least one location along a path of the pedestrians (step 1550). For example, the method 1500 includes causing the at least one transport vehicle to travel to one or more sources of the identified crowd. As another example, the method 1500 includes causing the at least one transport vehicle to travel to a location along a path of the identified crowd. In yet another example, the method 1500 includes causing the at least one transport vehicle to travel to a destination of the identified crowd. According to this example, the method 1500 may include identifying an end time of an event associated with the destination of the crowd, and scheduling the at least one transport vehicle to travel to the destination at a time when one or more pedestrians is likely to desire transportation.

In the foregoing description, embodiments of the invention have been described regarding numerous specific details that may vary from implementation to implementation. The description and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction. Any definitions expressly set forth herein for terms contained in such claims shall govern the meaning of such terms as used in the claims. In addition, when we use the term "further comprising," in the foregoing description or following claims, what follows this phrase can be an additional step or entity, or a sub-step/sub-entity of a previously-recited step or entity.

## Claims

1. A method (1500) comprising:
identifying a plurality of pedestrians (1444) traveling on a path (1012);
determining a count of the plurality of pedestrians (1444) traveling on the path (1012);
comparing the count to a count threshold value;
in response to the count exceeding the count threshold value, identifying a crowd condition; and
in response to identifying the crowd condition, causing at least one transport vehicle (1482A) to go to the path (1012).

2. The method (1500) of claim 1, wherein the path (1012) includes one of an origination location and a destination (1458) of one or more of the plurality of pedestrians (1444).

3. The method (1500) of claim 2, further comprising:
in response to identifying the crowd condition, scheduling at least one transport vehicle (1482A) to travel to the destination (1458) at a likely end time of an event associated with the destination (1458).

4. The method (1500) of any of the preceding claims, further comprising:
in response to identifying the crowd condition, conveying an offer for transportation to the plurality of pedestrians (1444).

5. The method (1500) of any of the preceding claims, further comprising:
identifying the plurality of pedestrians (1444) based on images from one or more camera sensors (121) having a view (614) of the path (1012).

6. The method (1500) of any of the preceding claims, further comprising:
identifying the plurality of pedestrians (1444) includes receiving data from one or more communication devices (140) carried by one or more of the plurality of pedestrians (1444).

7. The method (1500) of any of the preceding claims, further comprising:
determining the count of pedestrians (1444) based on a count of pedestrians (1444) travelling in a predetermined geographical area; and
identifying the crowd condition if the count of pedestrians (1444) within the geographical area exceeds the count threshold value.

8. The method (1500) of any of the preceding claims, wherein the threshold is a dynamic threshold.

9. A system (120) comprising:
a crowd detection module (1310) that:
identifies a plurality of pedestrians (1444) traveling on a path (1012);
determines a count of the plurality of pedestrians (1444) traveling on the path (1012);
compares the count to a count threshold value;
in response to the count exceeding the count threshold value, identifying a crowd condition; and
in response to identifying the crowd condition, causing at least one transport vehicle (1482A) to travel to the path (1012).

10. The system (120) of claim 9, wherein the path (1012) includes one of an origination location and a destination (1458) of one or more of the plurality of pedestrians (1444).

11. The system (120) of claim 10, wherein the crowd detection module (1310) is further configured to:
in response to identifying the crowd condition, schedule at least one transport vehicle (1482A) to travel to the destination (1458) at a likely end time of an event associated with the destination (1458).

12. The system (120) of any of the preceding claims 9-11, wherein the crowd detection module (1310) is further configured to:
in response to identifying the crowd condition, convey an offer for transportation to the plurality of pedestrians (1444).

13. The system (120) of any of the preceding claims 9-12, wherein the crowd detection module (1310) is further configured to:
identify the plurality of pedestrians (1444) based on images from one or more camera sensors (121) having a view (614) of the path (1012).

14. The system (120) of any of the preceding claims 9-13, wherein the crowd detection module (1310) is further configured to:
identify the plurality of pedestrians (1444) based on receiving data from one or more communication devices (140) carried by one or more of the plurality of pedestrians (1444).

15. The system (120) of any of the preceding claims 9-14, wherein the crowd detection module (1310) is further configured to:
determine the count of pedestrians (1444) travelling in a predetermined geographical area; and
identify the crowd condition if the count of pedestrians (1444) within the geographical area exceeds the count threshold value.
